(19) Europäisches Patentamt / European Patent Office / Office européen des brevets

(11) **EP 3 995 521 B1**

(12) **EUROPEAN PATENT SPECIFICATION**

(45) Date of publication and mention
of the grant of the patent:
**07.08.2024 Bulletin 2024/32**

(21) Application number: **21207793.7**

(22) Date of filing: **31.07.2020**

(51) International Patent Classification (IPC):
**C08G 18/08** (2006.01)     **C08G 18/09** (2006.01)
**C08G 18/12** (2006.01)     **C08G 18/72** (2006.01)
**C08G 18/73** (2006.01)     **C08G 18/75** (2006.01)
**C08G 18/28** (2006.01)     **C08G 18/79** (2006.01)

(52) Cooperative Patent Classification (CPC):
**C08G 18/0819; C08G 18/0828; C08G 18/092;
C08G 18/12; C08G 18/283; C08G 18/722;
C08G 18/73; C08G 18/755; C08G 18/792**

(54) **BLOCKED POLYISOCYANATE COMPOSITION, HYDROPHILIC POLYISOCYANATE COMPOSITION, RESIN COMPOSITION, RESIN FILM AND LAMINATED BODY**

BLOCKIERTE POLYISOCYANATZUSAMMENSETZUNG, HYDROPHILE POLYISOCYANATZUSAMMENSETZUNG, HARZZUSAMMENSETZUNG, HARZFILM UND LAMINIERTER KÖRPER

COMPOSITION DE POLYISOCYANATE BLOQUÉE, COMPOSITION DE POLYISOCYANATE HYDROPHILE, COMPOSITION DE RÉSINE, FILM DE RÉSINE ET CORPS STRATIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2019 JP 2019142741
02.12.2019 JP 2019218158
26.12.2019 JP 2019236784
30.07.2020 JP 2020129537**

(43) Date of publication of application:
**11.05.2022 Bulletin 2022/19**

(62) Document number(s) of the earlier application(s) in
accordance with Art. 76 EPC:
**20188916.9 / 3 783 041**

(73) Proprietor: **Asahi Kasei Kabushiki Kaisha
Tokyo 1000006 (JP)**

(72) Inventors:
• **HIGASHI, Masatsugu
Tokyo, 100-0006 (JP)**
• **TANAKA, Eiko
Tokyo, 100-0006 (JP)**
• **YOSHINUMA, Tomoharu
Tokyo, 100-0006 (JP)**
• **AZUMA, Koichiro
Tokyo, 100-0006 (JP)**

(74) Representative: **Strehl Schübel-Hopf & Partner
Maximilianstrasse 54
80538 München (DE)**

(56) References cited:
**EP-A1- 3 517 559     WO-A1-2019/065890**

Remarks:
The file contains technical information submitted after the application was filed and not included in this specification

**Description**

TECHNICAL FIELD

The present invention relates to a hydrophilic polyisocyanate composition, a blocked polyisocyanate composition, a resin composition and a resin film.

BACKGROUND OF THE INVENTION

Polyurethane resin coating materials conventionally have excellent abrasion resistance, chemical resistance and pollution resistance. Polyurethane resin coating materials using polyisocyanates derived from aliphatic diisocyanates or alicyclic diisocyanates have excellent weather resistance, particularly, and the demand thereof tends to increase. However, the polyurethane resin coating materials are generally two-part type, and therefore the use thereof is extremely inconvenient. That is, a conventional polyurethane resin coating material is composed of two components of a polyol and a polyisocyanate, and the polyol and the polyisocyanate are required to be stored separately, and then mixed when coating is conducted. Once the polyol and the polyisocyanate are mixed, the resultant coating material gels in a short time, and cannot be used. Thus, the polyurethane resin coating material has such a problem, and therefore it is extremely difficult to use the polyurethane resin coating material for automatic painting in the field of line painting, such as automotive painting or weak electrical painting. In addition, since isocyanates react readily with water, the isocyanates cannot be used in water-based coating materials such as electrodeposition coating materials. Furthermore, in the case where an isocyanate-containing coating material is used, it is necessary to thoroughly clean the painting machine and the painting tank at the end of the work. Therefore, the work efficiency is significantly reduced.

In order to ameliorate the above-mentioned problems, it has been proposed to use blocked polyisocyanates in which all active isocyanate groups are blocked with blocking agents. The blocked polyisocyanate does not react with a polyol at ordinary temperature. However, when heating is conducted, the blocking agent is dissociated, the active isocyanate group is regenerated to react with the polyol, which results in a cross-link reaction, and thus the above-mentioned problems are ameliorated. Accordingly, numerous blocking agents, such as phenol or methyl ethyl ketoxime, have been studied.

However, when a blocked polyisocyanate using such a blocking agent is used, baking at 140°C or more is required. The need to bake at such a high temperature is not only energetically disadvantageous, but also requires the heat resistance of the substrate, which is a factor that limits its application.

In contrast, blocked polyisocyanates using active methylene-based compounds such as acetoacetate ester or malonate diester have been studied as low temperature baking type blocked polyisocyanates. For example, Patent Documents 1 and 2 disclose blocked polyisocyanate compositions that cure at 90°C.

DOCUMENTS OF RELATED ART

Patent Documents

Patent Document 1: Japanese Unexamined Patent Application Publication No. 2002-322238

Patent Document 2: Japanese Unexamined Patent Application Publication No. 2006-335954

WO 2019/065890 A1 and EP 3517559 A1 disclose polyisocyanate compositions containing a hydrophilic polyisocyanate obtained from an alicyclic polyisocyanate and an aliphatic polyisocyanate.

SUMMARY OF THE INVENTION

PROBLEMS TO BE SOLVED BY THE INVENTION

However, in recent years, there has been a strong need for global environmental protection and adaptation to plastics having low heat resistance, and there is a need for blocked polyisocyanate compositions that cure at temperatures below 90°C. Under such circumstances, ones that exhibit good dispersibility in water-based polyols (water-dispersed polyols) having hydroxyl groups when mixed therewith, neither gel nor excessively increase the viscosity thereof when stored, and are curable at 80°C or less, have not yet been known.

The present invention provides, in light of the above-mentioned circumstances, a hydrophilic polyisocyanate composition having good dispersibility in water and excellent hardness when made into a resin film, as well as a blocked polyisocyanate composition, a resin composition, and a resin film, using the hydrophilic polyisocyanate composition.

MEANS TO SOLVE THE PROBLEMS

The present invention is set out in the appended set of claims

EFFECTS OF THE INVENTION

The hydrophilic polyisocyanate composition according to the present invention has good dispersibility in water and excellent hardness when made into a resin film. The blocked polyisocyanate composition formed by blocking the hydrophilic polyisocyanate composition with a blocking agent has good dispersibility in water and excellent hardness when made into a resin film. The resin composition containing the polyisocyanate composition or the blocked polyisocyanate composition has excellent hardness when made into a resin film.

EMBODIMENTS FOR CARRYING OUT THE INVENTION

Embodiments for carrying out the present invention (hereinafter, referred to as "embodiment" simply) will be explained below in detail.

In the present specification, the term "polyol" refers to a compound having at least two hydroxy groups (-OH).

In the present specification, the term "polyisocyanate" refers to a reactant formed by binding plural monomer compounds having at least one isocyanate group (-NCO).

«Hydrophilic polyisocyanate composition»

A hydrophilic polyisocyanate composition according to the present invention is derived from a hydrophilic compound and an alicyclic polyisocyanate having an isocyanurate group. The hydrophilic polyisocyanate composition according to the present embodiment contains a hydrophilic polyisocyanate that is a reactant of a hydrophilic compound and an alicyclic polyisocyanate. The amount of isocyanate groups modified by the hydrophilic compound, relative to the total mol of isocyanate groups in the alicyclic polyisocyanate, is 2% by mol to 15% by mol.

Since the hydrophilic polyisocyanate composition according to the present embodiment has the above-mentioned constitution, the dispersibility in water is favorable and the hardness is excellent when made into a resin film.

A hydrophilic group is introduced by reacting a hydrophilic compound and an alicyclic isocyanate monomer, or reacting a hydrophilic compound and an alicyclic polyisocyanate. In the hydrophilic polyisocyanate composition according to the present embodiment, the amount of isocyanate groups modified with the hydrophilic compound, relative to the total mol of isocyanate groups of the alicyclic polyisocyanate, may be referred to as the ratio of isocyanate groups modified by the hydrophilic compound, relative to 100% by mol of isocyanate groups of the alicyclic polyisocyanate that is a raw material, (hereinafter, may be abbreviated as "modification ratio"), or a ratio of isocyanate groups in which hydrophilic groups are introduced, relative to the total mol of isocyanate groups in which hydrophilic groups are introduced and isocyanate groups in which no hydrophilic groups are introduced.

The modification ratio is 2% by mol to 15% by mol, preferably 3% by mol to 14% by mol, more preferably 4% by mol to 12% by mol, and even more preferably 5% by mol to 10% by mol or less.

In the case where the modification ratio is within the above-mentioned range, the dispersibility in water is favorable, and the hardness is excellent when made into a resin film. In the case where the hydrophilic polyisocyanate composition having a modification ratio of the above-mentioned lower limit or more is made into a blocked polyisocyanate composition, the curability at a low temperature of approximately 80°C or lower tends to become excellent when made into a resin film, as shown in below examples.

The modification ratio can be determined by the following method. Specifically, the peak area ratio of unmodified alicyclic polyisocyanate, monomodified alicyclic polyisocyanate, dimodified alicyclic polyisocyanate, and trimodified alicyclic polyisocyanate is determined by liquid chromatography (LC) at 220 nm. The measurement device and measurement conditions are shown below.

(Device and measurement conditions)

LC device: UPLC (trade name) manufactured by Waters Corporation.
Column: ACQUITY UPLC HSS T3 1.8 μm, C18, inner diameter 2.1 mm × length 50 mm, manufactured by Waters Corporation.
Flow rate: 0.3 mL/min
Mobile phase: A = 10 mM ammonium acetate aqueous solution, B = acetonitrile
Gradient condition: An initial constitution of mobile phase is A/B=98/2, the ratio of B is increased linearly after the sample injection, such that the constitution of mobile phase after ten minutes becomes A/B=0/100.
Detection method: Photodiode array detector is used at a measurement wave length of 220 nm.

Next, each constitution components of the hydrophilic polyisocyanate composition according to the present embodiment will be explained particularly.

<Alicyclic polyisocyanate>

An alicyclic polyisocyanate is a reactant formed by reacting a plurality of monomeric compounds having at least one isocyanate groups (-NCO) and a backbone composed of an alicyclic hydrocarbon group (hereinafter referred to as "alicyclic isocyanate monomers"), the alicyclic polyisocyanate having an isocyanurate group. Here, the term "isocyanurate group" refers to a functional group formed by cyclotrimerization of three isocyanate groups.

The carbon number of the alicyclic isocyanate monomer is preferably 4 to 30. Specific examples of the alicyclic isocyanate monomer include alicyclic diisocyanates such as isophorone diisocyanate (hereinafter, may be referred to as "IPDI"), 1,3-bis(diisocyanatemethyl)-cyclohexane, 4,4'-dicyclohexylmethane diisocyanate, norbornane diisocyanate, and di(isocyanatemethyl)-norbornane. One of these alicyclic isocyanate monomers may be used alone or a combination of at least two thereof may be used. Among these, the alicyclic polyisocyanate is preferably a polyisocyanate having an isocyanurate group derived from IPDI.

Although the alicyclic polyisocyanate may further have a functional group other than isocyanurate groups, in addition to an isocyanurate group, within a range in which effects thereof are not impaired, it is preferable that the alicyclic polyisocyanate have only an isocyanurate group. Examples of the functional group other than the isocyanurate group include an allophanate group, a urethodione group, an iminooxadiazine dione group, a urethane group, and a biuret group.

<Additional polyisocyanate>

The hydrophilic polyisocyanate composition according to the present embodiment does not include an additional polyisocyanate different from the alicyclic polyisocyanate. The hydrophilic polyisocyanate composition includes the alicyclic polyisocyanate only.

<Hydrophilic compound>

A hydrophilic compound is a compound having a hydrophilic group. The hydrophilic compound preferably has at least one active hydrogen group that reacts with at least one isocyanate group of the alicyclic polyisocyanate in one molecule of the hydrophilic compound, in addition to the hydrophilic group. Specific examples of the active hydrogen group include a hydroxyl group, a mercapto group, a carboxylic acid group, an amino group, and a thiol group.

Examples of the hydrophilic compound include nonionic compounds, cationic compounds, and anionic compounds. One of the hydrophilic compounds may be used alone or a combination of at least two thereof may be used. Among these, the hydrophilic compound is preferably a nonionic compound from the viewpoint of easy availability and resistance to electrical interaction with the formulated components, or an anionic compound from the viewpoint of suppressibility of decrease in hardness of the resultant resin film.

(Nonionic compound)

Specific examples of the nonionic compound include monoalcohols and compounds in which ethylene oxide is added to a hydroxyl group of alcohol. Examples of the monoalcohol include methanol, ethanol, and butanol. Examples of the compound in which ethylene oxide is added to a hydroxyl group of alcohol include ethylene glycol, diethylene glycol, polyethylene glycol, and polyethylene glycol monomethyl ether. These nonionic compounds have an active hydrogen group that reacts with an isocyanate group.

Among these, polyethylene glycol monoalkyl ethers in which ethylene oxide is added to a hydroxyl group of monoalcohol are preferable, in terms that a small use amount thereof makes it possible to improve the dispersibility in water of the hydrophilic polyisocyanate composition.

The addition number of ethylene oxide of the compound in which ethylene oxide is added is preferably 4 to 30, and more preferably 4 to 25. In the case where the addition number of ethylene oxide is the above-mentioned lower limit or more, the dispersibility in water tends to be effectively imparted to the hydrophilic polyisocyanate composition.

In the case where the addition number of ethylene oxide is the above-mentioned upper limit or less, the generation of precipitates in the hydrophilic polyisocyanate composition tends to be further suppressed during storage at a low temperature.

The lower limit of the amount of nonionic hydrophilic groups added to the alicyclic polyisocyanate (hereinafter, may be referred to as "amount of nonionic hydrophilic group"), relative to the mass of solid components in the hydrophilic polyisocyanate composition, is preferably 1% by mass, more preferably 2% by mass, even more preferably 3% by mass, and particularly preferably 4% by mass, from the viewpoint of dispersion stability in water of the hydrophilic polyisocyanate composition.

The upper limit of the amount of nonionic hydrophilic group, relative to the mass of solid components in the hydrophilic polyisocyanate composition, is preferably 55% by mass, more preferably 50% by mass, even more preferably 48% by mass, and particularly preferably 44% by mass, from the viewpoint of water resistance of the resultant resin film.

The amount of nonionic hydrophilic group, relative to the mass of solid components in the hydrophilic polyisocyanate composition, is preferably 1% by mass to 55% by mass, more preferably 2% by mass to 50% by mass, even more preferably 3% by mass to 48% by mass, and particularly preferably 4% by mass to 44% by mass.

In the case where the amount of nonionic hydrophilic group is within the above-mentioned range, the hydrophilic polyisocyanate composition tends to be further dispersed in water to obtain a uniform film.

(Cationic compound)

Specific examples of the cationic compound include compounds having both a cationic hydrophilic group and an active hydrogen group. In addition, a compound having an active hydrogen group such as a glycidyl group and a compound having a cationic hydrophilic group such as a sulfide or a phosphine may be combined as hydrophilic compounds. In the case, the compound having an active hydrogen group is reacted with a compound having an isocyanate group in advance, followed by adding a functional group such as a glycidyl group thereto and then reacting a compound such as a sulfide or a phosphine with the resultant. A compound having both a cationic hydrophilic group and an active hydrogen group is preferably used from the standpoint of ease of manufacture.

Specific examples of the compound having both a cationic hydrophilic group and an active hydrogen group include dimethylethanolamine, diethylethanolamine, diethanolamine, and methyldiethanolamine. A tertiary amino group added using the compound may be quaternized with dimethyl sulfate or diethyl sulfate, for example.

The reaction of the cationic compound and the alicyclic polyisocyanate can be reacted in the presence of a solvent. In the case, a solvent free from any active hydrogen groups is preferably used, and examples thereof include ethyl acetate, propylene glycol monomethyl ether acetate and dipropylene glycol dimethyl ether.

The cationic hydrophilic group added to the alicyclic polyisocyanate is preferably neutralized with a compound having an anionic group. Specific examples of the anionic group include a carboxy group, a sulfonic acid group, a phosphoric acid group, halogen groups, and a sulfuric acid group.

Specific examples of the compound having a carboxyl group include formic acid, acetic acid, propionic acid, butyric acid, and lactic acid.

Specific examples of the compound having a sulfonic acid group include ethane sulfonic acid.

Specific examples of the compound having a phosphoric acid group include phosphoric acid, and an acidic phosphoric acid ester.

Specific examples of the compound having a halogen group include hydrochloric acid.

Specific examples of the compound having a sulfuric acid group include sulfuric acid.

Among these, the compound having an anionic group is preferably a compound having a carboxyl group, and more preferably acetic acid, propionic acid or butyric acid.

(Anionic compound)

Specific examples of an anionic hydrophilic group include a carboxy group, a sulfonic acid group, a phosphoric acid group, halogen groups, and a sulfuric acid group.

Specific examples of an anionic compound include compounds having both an anionic group and an active hydrogen group, and further specific examples thereof include compounds having a carboxy group of a monohydroxycarboxylic acid or a polyhydroxycarboxylic acid as an anionic group.

Examples of the monohydroxycarboxylic acid include 1-hydroxyacetic acid, 3-hydroxypropanoic acid, 12-hydroxy-9-octadecanoic acid, hydroxypivalic acid, and lactic acid.

Examples of the compound having a carboxy group of polyhydroxycarboxylic acid as an anionic group include dimethylol acetic acid, 2,2-dimethylol butyric acid, 2,2-dimethylolpentanoic acid, dihydroxysuccinic acid, and dimethylolpropionic acid.

Additional examples thereof include compounds having both a sulfonic acid group and an active hydrogen group, and further specific examples thereof include isethionic acid.

Among these, the compound having both an anionic group and an active hydrogen group is preferably hydroxypivalic acid or dimethylolpropionic acid.

The anionic hydrophilic group added to the alicyclic polyisocyanate is preferably neutralized with an amine-based compound that is a basic substance.

Specific examples of amine-based compound include ammonia and water-soluble amino compounds.

Specific examples of water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. Additional examples thereof include tertiary amines such as triethylamine and dimethylethanolamine. One of these amine-based compounds may be used alone or a combination of at least two thereof may be used.

<Preparation method of hydrophilic polyisocyanate composition>

Although there is no particular limitation on the method for preparing the hydrophilic polyisocyanate compositions according to the present embodiment, examples thereof include: (i) a method in which alicyclic isocyanate monomers are subjected to prepolymerization, followed by reacting the resultant prepolymer with a hydrophilic compound; and (ii) a method in which an alicyclic isocyanate monomer and a hydrophilic compound are reacted. Among these, the above-mentioned method (i) is preferable.

In the method for prepolymerizing alicyclic isocyanate monomers to obtain a prepolymer having an isocyanurate group, an isocyanurate-forming reaction catalyst may be used, for example.

Although there is no particular limitation on the isocyanurate-forming reaction catalyst, it is generally preferable that the isocyanurate-forming reaction catalyst be basic. Specific examples of the isocyanurate-forming reaction catalyst include the following compounds.

1) Hydroxides of tetraalkylammonium such as tetramethylammonium, tetraethylammonium, or tetrabutylammonium, and organic weak acid salts, such as acetic acid salts, propionic acid salts, octylic acid salts, capric acid salts, myristic acid salts, or benzoic acid salts, of the above-mentioned tetraalkylammonium.

2) Hydroxides of aryltrialkylammonium such as benzyltrimethylammonium or trimethylphenylammonium, and organic weak acid salts, such as acetic acid salts, propionic acid salts, octylic acid salts, capric acid salts, myristic acid salts, or benzoic acid salts, of the above-mentioned aryltrialkylammonium.

3) Hydroxides of hydroxyalkylammonium such as trimethylhydroxy ethyl ammonium, trimethylhydroxypropylammonium, triethylhydroxyethylammonium, or triethylhydroxypropylammonium, and organic weak acid salts, such as acetic acid salts, propionic acid salts, octylic acid salts, capric acid salts, myristic acid salts, or benzoic acid salts, of the above-mentioned hydroxyalkylammonium.

4) Metallic salts, such as tin salts, zinc salts, or lead salts, of alkylcarboxylic acid such as acetic acid, propionic acid, caproic acid, octylic acid, capric acid, or myristic acid.

5) Alkolates of metal such as sodium or potassium.

6) Compounds having an aminosilyl group such as hexamethylene disilazane.

7) Mannich bases.

8) Mixtures of tertiary amines and epoxy compounds.

9) Phosphoric compounds such as tributylphosphine.

Among these, the isocyanurate-forming reaction catalyst is preferably a quaternary ammonium hydroxide or an organic weak acid salt of quaternary ammonium, and more preferably a tetraalkylammonium hydroxide, an organic weak acid salt of tetraalkylammonium, an aryltrialkylammonium hydroxide, or an organic weak acid salt of aryltrialkylammonium, from the viewpoint of suppressibility of generation of unrequired by-products.

The upper limit of the used amount of above-mentioned isocyanurate-forming reaction catalyst, relative to the charged mass of alicyclic isocyanate monomers, is preferably 1000 ppm by mass, more preferably 500 ppm by mass, and even more preferably 100 ppm by mass.

In contrast, the lower limit of the used amount of the above-mentioned isocyanurate-forming reaction catalyst is not particularly limited, and may be 10 ppm by mass, for example.

The isocyanurate-forming reaction temperature is preferably 50°C to 120°C, and more preferably 55°C to 90°C. In the case where the isocyanurate-forming reaction temperature is the above-mentioned upper limit or less, coloration of the prepolymer tends to be further effectively suppressed.

When the desired conversion ratio (the ratio of the mass of the prepolymer formed in the isocyanurate-forming reaction to the charged mass of the alicyclic isocyanate monomer) is reached, the isocyanurate-forming reaction is terminated by adding an acidic compound (such as phosphoric acid or acidic phosphoric acid ester) to the resultant.

The progress of the reaction is required to be terminated at an initial stage so as to obtain the prepolymer. However, the initial reaction speed of the isocyanurate-forming reaction is so rapid that it is difficult to terminate the reaction at an initial stage, and reaction conditions, especially the amount of catalyst added and the method of addition thereof, need to be carefully selected. For example, a method of partitioning and adding a catalyst for a constant time period is recommended as a preferred method.

Therefore, the conversion ratio of the isocyanurate-forming reaction to obtain the prepolymer is preferably 10% to 60%, more preferably 15% to 55%, and even more preferably 20% to 50%.

In the case where the conversion ratio of the isocyanurate-forming reaction is the above-mentioned upper limit or less, the viscosity of the hydrophilic polyisocyanate composition can be further decreased. In the case where the conversion ratio of the isocyanurate-forming reaction is the above-mentioned lower limit or more, the procedure for terminating the reaction can be conducted more easily.

A monovalent to hexavalent alcohol may be used in addition to the above-mentioned alicyclic isocyanate monomers to obtain the prepolymer containing an isocyanurate group.

Examples of the available monovalent to hexavalent alcohols include non-polymerizable alcohols, and polymerizable alcohols. The term "non-polymerizable alcohol" refers to an alcohol free from any polymerizable groups. In contrast, the term "polymerizable alcohol" refers to an alcohol obtained by polymerizing monomers having a polymerizable group and a hydroxyl group.

Examples of the non-polymerizable alcohol include monoalcohols and polyvalent alcohols such as, diols, triols, and tetraols.

Examples of the monoalcohols include methanol, ethanol, n-propanol, isopropanol, n-butanol, isobutanol, sec-butanol, n-pentanol, n-hexanol, n-octanol, n-nonanol, 2-ethylbutanol, 2,2-dimethylhexanol, 2-ethylhexanol, cyclohexanol, methylcyclohexanol, and ethylcyclohexanol.

Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethyl pentanediol, 2-butyl-2-ethyl-1,3-propanediol, and 2,2-diethyl-1,3-propanediol.

Examples of the triols include glycerine, and trimethylolpropane.

Examples of the tetraols include pentaerythritol.

Although there is no particular limitation on the polymerizable alcohols, examples thereof include polyester polyols, polyether polyols, acrylic polyols, and polyolefin polyols.

Although there is no particular limitation on the polyester polyol, examples thereof include reactants obtained by condensation reaction of at least one dibasic acids and at least one polyvalent alcohols.

Although there is no particular limitation on the dibasic acid, at least one carboxylic acid such as succinic acid, adipic acid, sebacic acid, dimeric acid, maleic anhydride, phthalic anhydride, isophthalic acid, or terephthalic acid, may be used as the dibasic acid.

Although there is no particular limitation on the polyvalent alcohol, at least one polyvalent alcohol selected from the group consisting of ethylene glycol, propylene glycol, diethylene glycol, neopentyl glycol, trimethylolpropane, and glycerine may be used.

Additional examples of the polyester polyols include polycaprolactones obtained by subjecting ε-caprolactone to ring-opening polymerization using the above-mentioned polyvalent alcohol.

Although there is no particular limitation on the polyether polyols, examples thereof include: polyether polyols obtained by adding at least one alkylene oxide to at least one polyvalent alcohol using an alkali metal hydroxide or a strong basic catalyst; polyether polyols obtained by reacting an alkylene oxide with a polyamine compound; and polymer polyols obtained by polymerizing acrylamides using the above-mentioned polyethers as mediums.

Examples of the alkali metal include lithium, sodium, and potassium.

Examples of the strong basic catalyst include alkolates, and alkylamines.

Examples of the polyvalent alcohol include those mentioned above for the polyester polyols.

Examples of the alkylene oxide include ethylene oxide, propylene oxide, butylene oxide, cyclohexene oxide, and styrene oxide.

Examples of the polyamine compound include ethylene diamine.

Although there is no particular limitation on the acrylic polyols, examples thereof include ones obtained by copolymerizing at least one ethylenically unsaturated binding-containing monomer having a hydroxyl group with at least one ethylenically unsaturated binding-containing monomer copolymerizable therewith and different therefrom.

Although there is no particular limitation on the ethylenically unsaturated binding-containing monomer having a hydroxyl group, examples thereof include hydroxyethyl acrylate, hydroxypropyl acrylate, hydroxybutyl acrylate, hydroxyethyl methacrylate, hydroxypropyl methacrylate, and hydroxybutyl methacrylate.

Although there is no particular limitation on the ethylenically unsaturated binding-containing monomer copolymerizable with the ethylenically unsaturated binding-containing monomer having a hydroxyl group and different therefrom, examples thereof include acrylic acid esters, methacrylic acid esters, unsaturated carboxylic acids, unsaturated amides, vinyl-based monomers, and vinyl-based monomers having a hydrolyzable silyl group.

Examples of the acrylic acid esters include methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.

Examples of the methacrylic acid esters include methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

Examples of the unsaturated carboxylic acids include acrylic acid, methacrylic acid, maleic acid, and itaconic acid.

Examples of the unsaturated amides include acrylamide, methacrylamide, N,N-methylenebisacrylamide, diacetoneacrylamide, diacetonemethacrylamide, maleic acid amide, and maleimide.

Examples of the vinyl-based monomers include glycidyl methacrylate, styrene, vinyltoluene, vinyl acetate, acrylonitrile, and dibutyl fumarate.

Examples of the vinyl-based monomers having a hydrolyzable silyl group include vinyl trimethoxysilane, vinylmethyl dimethoxysilane, and γ-(meth)acryloxypropyl trimethoxysilane.

Examples of the polyolefin polyols include polybutadienes having hydroxylated terminal and hydrogen additives thereof.

After the end of the reaction, the reaction liquid may be subjected to thin-film distillation or extraction to remove unreacted alicyclic isocyanate monomers therefrom, and thus a prepolymer is obtained.

In the reaction of the prepolymer and the hydrophilic compound, an organic metallic salt, a tertiary amine-based compound, or an alkolate of alkali metal may be used as a catalyst. Examples of metal constituting the organic metallic salt include tin, zinc, and lead. Examples of the alkali metal include sodium.

The reaction of the prepolymer and the hydrophilic compound is preferably conducted at -20°C to 150°C, and more preferably at 30°C to 130°C. In the case where the reaction temperature is the above-mentioned lower limit or more, the reactivity tends to be further increased. In the case where the reaction temperature is the above-mentioned upper limit or less, the side-reaction tends to be further effectively suppressed.

It is preferable that the hydrophilic compound be completely reacted with the prepolymer such that the hydrophilic compound does not remain in an unreacted state. The absence of the unreacted hydrophilic compound tends to further improve the dispersibility in water of the hydrophilic polyisocyanate composition.

<Characteristics of hydrophilic polyisocyanate composition>

[Average number of isocyanate functional group]

In the hydrophilic polyisocyanate composition according to the present embodiment, the average number of isocyanate functional groups in a raw material alicyclic polyisocyanate before hydrophilization (before modification with a hydrophilic compound) is preferably 2.5 to 6.0, more preferably 2.7 to 5.8, and even more preferably 2.9 to 5.5.

In the case where the average number of functional group is within the above-mentioned range, the hardness of a resultant resin film tends to be increased.

The average number of functional groups can be measured by the method described in examples mentioned below.

[Weight-average molecular weight]

The weight-average molecular weight (Mw) of the hydrophilic polyisocyanate composition is preferably 900 to 20000, more preferably 1200 to 18000, and even more preferably 1300 to 17000.

In the case where the weight-average molecular weight is within the above-mentioned range, the dispersibility in water is favorable, and the hardness of a resultant resin film is excellent.

The weight-average molecular weight can be measured by the method described in examples mentioned below.

«Blocked polyisocyanate composition»

The blocked polyisocyanate composition according to the present embodiment is formed by blocking at least a part of isocyanate groups in the above-mentioned hydrophilic polyisocyanate composition with a blocking agent.

It is preferable that all of isocyanate groups in the hydrophilic polyisocyanate composition be blocked with a blocking agent. It is confirmed that all of isocyanate groups is blocked with a blocking agent by confirming loss of absorption due to isocyanates by Fourier transform infrared spectroscopy (FT-IR).

In the case where the blocked polyisocyanate composition according to the present embodiment further contains an alicyclic polyisocyanate in which no hydrophilic group is introduced (hereinafter, may be referred to as "unintroduced alicyclic polyisocyanate") or another polyisocyanate, in addition to the above-mentioned alicyclic polyisocyanate having both an introduced hydrophilic group and an isocyanurate group (hereinafter, may be referred to as "water-dispersible polyisocyanate"), it is preferable that all isocyanate groups of the polyisocyanates be blocked with a blocking agent. Although the water-dispersible polyisocyanate, the unintroduced alicyclic polyisocyanate and the other polyisocyanate may be blocked with an identical blocking agent or different blocking agents, the water-dispersible polyisocyanate, the unintroduced alicyclic polyisocyanate and the other polyisocyanate are preferably blocked with an identical blocking agent.

Since the blocked polyisocyanate composition according to the present embodiment is derived from the above-mentioned hydrophilic polyisocyanate composition, the dispersibility in water is favorable and the hardness and the curability at a low temperature of a resultant resin film are excellent.

Each component of the blocked polyisocyanate composition according to the present embodiment will be described below, specifically. The hydrophilic polyisocyanate composition is as described above.

<Blocking agent>

Although there is no particular limitation on a blocking agent, specific examples thereof include compounds having one active hydrogen in a molecule thereof. Although there is no particular limitation on such a blocking agent, specific examples thereof include alcohol-based compounds, alkylphenol-based compounds, phenol-based compounds, active methylene-based compounds, mercaptan-based compounds, acid amide-based compounds, acid imide-based compounds, imidazole-based compounds, urea-based compounds, oxime-based compounds, amine-based compounds, imine-based compounds, pyrazole-based compounds, and triazole-based compounds. One of these blocking agents may be used alone or a combination of at least two thereof may be used. Further specific examples of the blocking agent include the following compounds.

Although there is no particular limitation on the alcohol-based compounds, specific examples thereof include methanol, ethanol, 2-propanol, n-butanol, sec-butanol, 2-ethyl-1-hexanol, 2-methoxyethanol, 2-ethoxyethanol, and 2-butoxyethanol.

Although there is no particular limitation on the alkylphenol-based compounds, specific examples thereof include mono or dialkylphenols substituted with an alkyl group having a carbon number of 4 or more. Examples of the monoalkylphenols include n-propylphenol, iso-propylphenol, n-butylphenol, sec-butylphenol, tert-butylphenol, n-hexylphenol, 2-ethylhexylphenol, n-octylphenol, and n-nonylphenol. Examples of the dialkylphenols include di-n-propylphenol, diisopropylphenol, isopropylcresol, di-n-butylphenol, di-tert-butylphenol, di-sec-butylphenol, di-n-octylphenol, di-2-ethylhexylphenol, and di-n-nonylphenol.

Although there is no particular limitation on the phenol-based compounds, specific examples thereof include phenol, cresol, ethylphenol, styreneated phenol, and hydroxybenzoic acid ester.

Although there is no particular limitation on the active methylene-based compounds, specific examples thereof include dimethyl malonate, diethyl malonate, methyl acetoacetate, ethyl acetoacetate, acetylacetone and ethyl isobutanoyl acetate.

Although there is no particular limitation on the mercaptan-based compounds, specific examples thereof include butylmercaptan and dodecylmercaptan.

Although there is no particular limitation on the acid amide-based compounds, specific examples thereof include acetanilide, acetamide, $\varepsilon$-caprolactam, $\delta$-valerolactam, and $\gamma$-butyrolactam.

Although there is no particular limitation on the acid imide-based compounds, specific examples thereof include succinic acid imide and maleic acid imide.

Although there is no particular limitation on the imidazole-based compounds, specific examples thereof include imidazole and 2-methylimidazole.

Although there is no particular limitation on the urea-based compounds, specific examples thereof include urea, thiourea, and ethylene urea.

Although there is no particular limitation on the oxime-based compounds, specific examples thereof include formaldoxime, acetaldoxime, acetoxime, methylethylketoxime, and cyclohexanonoxime.

Although there is no particular limitation on the amine-based compounds, specific examples thereof include diphenylamine, aniline, carbazole, di-n-propylamine, diisopropylamine, and isopropylethylamine.

Although there is no particular limitation on the imine-based compounds, specific examples thereof include ethylene imine and polyethylene imine.

Although there is no particular limitation on the pyrazole-based compounds, specific examples thereof include pyrazole, 3-methylpyrazole, and 3,5-dimethylpyrazole.

Although there is no particular limitation on the triazole-based compounds, specific examples thereof include 1,2,4-triazole and 1,2,3-triazole.

Among these, the active methylene-based compound, the oxime-based compound, the amine-based compound, the pyrazole-based compound, or the triazole-based compound is preferable in terms of the easy availability, and the viscosity, the curing temperature and the curing time of the resultant blocked polyisocyanate composition, and diisopropyl malonate or di-tert-butyl malonate is more preferable in terms that the curability at a low temperature of approximately 80°C or less when made into a resin film is particularly excellent.

<Preparation method of blocked polyisocyanate composition>

The blocked polyisocyanate composition is obtained, for example, by reacting the above-mentioned hydrophilic polyisocyanate composition and the above-mentioned blocking agent, without particular limitations.

The blocking reaction of the hydrophilic polyisocyanate composition and the blocking agent can be conducted in the presence or absence of a solvent to obtain a blocked polyisocyanate composition.

One of the blocking agent may be used alone, or a combination of at least two thereof may be used.

The addition amount of the blocking agent, relative to the total mol of isocyanate groups, may be generally 80% by mol to 200% by mol, preferably 90% by mol to 150% by mol, and more preferably 93% by mol to 130% by mol.

In the case where a solvent is used, a solvent inert against an isocyanate group may be used.

In the case where a solvent is used, the amount of solid components derived from the hydrophilic polyisocyanate composition and the blocking agent, relative to 100 parts by mass of the blocked polyisocyanate composition, may be generally 10 parts by mass to 95 parts by mass, preferably 15 parts by mass to 80 parts by mass, and even more preferably 20 parts by mass to 75 parts by mass.

In the blocking reaction, an organic metallic salt, such as tin, zinc or lead salt, a tertiary amine-based compound, or an alkolate of an alkali metal such as sodium may be used as a catalyst.

Although the addition amount of the catalyst varies depending on the blocking reaction temperature or the like, the addition amount, relative to 100 parts by mass of the polyisocyanate, may be generally 0.05 parts by mass to 1.5 parts by mass, and preferably 0.05 parts by mass to 1.0 parts by mass.

The blocking reaction may be conducted generally at -20°C to 150°C, preferably 0°C to 100°C, and more preferably 10°C to 90°C. In the case where the blocking reaction temperature is the above-mentioned lower limit or more, the reaction speed can be increased. In the case where the blocking reaction temperature is the above-mentioned upper limit or less, the side-reaction can be further suppressed.

After the blocking reaction, neutralization may be conducted by adding an acidic compound or the like.

As the acidic compound, an inorganic acid or an organic acid may be used. Examples of the inorganic acid include hydrochloric acid, phosphorus acid, and phosphoric acid. Examples of the organic acid include methanesulfonic acid, p-toluenesulfonic acid, dioctylphthalate, and dibutylphthalate.

<<Resin composition>>

The resin composition according to the present embodiment contains: either the above-mentioned hydrophilic polyisocyanate composition according to the fifth embodiment or the above-mentioned blocked polyisocyanate composition according to the sixth embodiment; and a polyol.

The resin composition according to the present embodiment exhibits excellent hardness when made into a resin film due to the presence of the hydrophilic polyisocyanate composition as a curing agent component. Alternatively, the resin composition according to the present embodiment exhibits excellent hardness and curability at a low temperature of approximately 80°C or less when made into a resin film due to the presence of the above-mentioned blocked polyisocyanate composition.

Constitution components of the resin composition according to the present embodiment will be described below, specifically. The hydrophilic polyisocyanate compositions and the block polyisocyanate compositions are as described above.

<Polyol>

Examples of the polyol include polyester polyols, polyether polyols, acrylic polyols, polyolefin polyols, and fluorinated polyols, polycarbonate polyols, and polyurethane polyols. One of these polyols may be used alone, or a combination of at least two thereof may be used.

Among these, the polyol is preferably a polyester polyol, an acrylic polyol, or a mixture thereof.

[Polyester polyol]

Examples of the polyester polyol include reactants obtained by condensation reaction of either a dibasic acid or a mixture of at least two thereof with either a polyvalent alcohol or a mixture of at least two thereof.

Examples of the dibasic acid include carboxylic acids such as succinic acid, adipic acid, dimeric acid, maleic anhydride, phthalic anhydride, isophthalic acid, terephthalic acid, and 1,4-cyclohexanedicarboxylic acid.

Examples of the polyvalent alcohol include ethylene glycol, propylene glycol, diethylene glycol, 1,4-butanediol, neopentyl glycol, 1,6-hexanediol, trimethyl pentanediol, cyclohexanediol, trimethylolpropane, glycerine, pentaerythritol, 2-methylol propanediol, and ethoxylated trimethylolpropane.

Alternatively, a polycaprolactone obtained by subjecting lactone, such as ε-caprolactone, to ring-opening polymerization using a polyvalent alcohol may also be used as the polyester polyol.

[Polyether polyol]

Although there is no particular limitation on the polyether polyols, examples thereof include the following (1) to (3).

(1) Polyether polyols obtained by random or block addition of at least one alkylene oxide to at least one polyvalent hydroxy compound using a catalyst.
Examples of the catalyst include hydroxides (such as lithium, sodium, or potassium hydroxide), strong basic catalysts (such as alkolates or alkylamines), and composite metal cyanide complexes (such as metal porphyrin, zinc hexacyano cobaltate complex).
Examples of the alkylene oxide include ethylene oxide, propylene oxide, butylene oxide, cyclohexene oxide, and styrene oxide.
(2) Polyether polyols obtained by reacting an alkylene oxide with a polyamine compound.
Examples of the polyamine compound include ethylene diamines.
Examples of the alkylene oxide include the same compounds as mentioned in (1).
(3) Polymer polyols obtained by polymerizing acrylamides using the polyether polyols obtained in (1) or (2) as mediums.

Examples of the polyvalent hydroxy compound include the following (i) to (vi).

(i) Diglycerin, ditrimethylol propane, pentaerythritol, and dipentaerythritol.
(ii) Sugar alcohol-based compounds such as erythritol, D-threitol, L-arabinitol, ribitol, xylitol, sorbitol, mannitol, galactitol, and rhamnitol.
(iii) Monosaccharides such as arabinose, ribose, xylose, glucose, mannose, galactose, fructose, sorbose, rhamnose, fucose, and ribodesose.
(iv) Disaccharides such as trehalose, sucrose, maltose, cellobiose, gentiobiose, lactose, and melibiose.
(v) Trisaccharides such as raffinose, gentianose, and melicitose.
(vi) Tetrasaccharides such as stachyose.

[Acrylic polyol]

Although there is no particular limitation on the acrylic polyols, examples thereof include ones obtained by copolymerizing at least one ethylenically unsaturated binding-containing monomer having a hydroxyl group with at least one ethylenically unsaturated binding-containing monomer copolymerizable therewith and different therefrom.

Although there is no particular limitation on the ethylenically unsaturated binding-containing monomer having a hydroxyl group, examples thereof include hydroxyethyl acrylate, hydroxypropyl acrylate, hydroxybutyl acrylate, hydroxyethyl methacrylate, hydroxypropyl methacrylate, and hydroxybutyl methacrylate. One of these may be used alone, or a combination of at least two thereof may be used. Among these, hydroxyethyl acrylate or hydroxyethyl methacrylate is preferable.

Examples of the ethylenically unsaturated binding-containing monomer copolymerizable with the above-mentioned ethylenically unsaturated binding-containing monomer having a hydroxyl group and different therefrom include the following (i) to (6). One of these may be used alone, or a combination of at least two thereof may be used.

(1) Acrylic acid esters such as methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate, 2-methoxyethyl acrylate, ethoxyethyl acrylate, and methoxy-polyethylene glycol acrylate.

(2) Methacrylic acid esters such as methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

(3) Unsaturated carboxylic acids such as acrylic acid, methacrylic acid, maleic acid, and itaconic acid.

(4) Unsaturated amides such as acrylamide, methacrylamide, N,N-methylenebisacrylamide, diacetoneacrylamide, diacetonemethacrylamide, maleic acid amide, and maleimide.

(5) Vinyl-based monomers such as glycidyl methacrylate, styrene, vinyltoluene, vinyl acetate, acrylonitrile, and dibutyl fumarate.

(6) Vinyl-based monomers having a hydrolyzable silyl group such as vinyl trimethoxysilane, vinylmethyl dimethoxysilane, and γ-(meth)acryloxypropyl trimethoxysilane.

[Polyolefin polyol]

Although there is no particular limitation on the polyolefin polyol, examples thereof include polybutadienes having at least two hydroxyl groups, hydrogenated polybutadiene, polyisoprene, and hydrogenated polyisoprene.

The statistic number of hydroxyl groups of one molecule of a polyol (hereinafter, abbreviated as "hydroxyl group average number") is preferably at least two. In the case where the hydroxyl group average number of a polyol is two or more, decrease in the cross-link density of a coating film obtained by curing a one-liquid type coating composition according to the present embodiment tends to be further suppressed.

[Fluorinated polyol]

In the present specification, the term "fluorinated polyol" means a polyol containing fluorine in a molecule thereof. Specific examples of the fluorinated polyol include: fluoroolefins disclosed in Japanese Unexamined Patent Application Publication No. Sho 57-34107 (Reference Document 1) and Japanese Unexamined Patent Application Publication No. Sho 61-275311 (Reference Document 2); and copolymers of cyclovinyl ethers, hydroxyalkylvinyl ethers, vinyl monocarboxylates, or the like.

[Polycarbonate polyol]

Although there is no particular limitation on the polycarbonate polyols, examples thereof include the following (1) to (4):

(1) dialkylcarbonate such as dimethylcarbonate;
(2) alkylenecarbonate such as ethylene carbonate;
(3) diarylcarbonate such as diphenylcarbonate; and
(4) ones obtained by condensation polymerizing of low-molecular carbonate compounds such as the above-mentioned compounds (1) to (3).

[Polyurethane polyol]

Although there is no particular limitation on the polyurethane polyol, examples thereof include ones obtained by conventionally reacting a polyol free from a carboxy group with an isocyanate component.

Examples of the polyol free from a carboxyl group include: low-molecular polyols such as ethylene glycol and propylene glycol; and high-molecular polyols such as acrylic polyol, polyester polyol, and polyether polyol.

[Hydroxy group value of polyol]

Although there is no particular limitation on the hydroxy group value per resin of the polyol, the hydroxy group value is preferably 10 mgKOH/resin g to 300 mgKOH/resin g.

In the case where the hydroxy group value per resin is the above-mentioned lower limit or more, there is a tendency in which the decrease in the cross-link density is suppressed and intended physical properties can be sufficiently achieved. In the case where the hydroxyl value per resin is the above-mentioned upper limit or less, there is a tendency in which an excessive increase in the cross-link density is suppressed, and the mechanical physical property of a coating film formed by curing the one-liquid type coating composition according to the present embodiment can be further improved.

The hydroxyl group value of the polyol may be measured in accordance with JIS K1557.

<Other additives>

The resin composition according to the present embodiment may further contain other additives.

Examples of the other additives include curing agents that can react with a crosslinking functional group in the polyol, curing catalysts, solvents, pigments (such as extender pigments, coloration pigments, and metallic pigments), ultraviolet absorbers, light stabilizers, radical stabilizer, yellowing-inhibitor that suppresses coloration at a baking step, paint-surface adjusting agents, flow adjusting agents, pigment dispersing agents, defoaming agents, thickening agents, and film forming aids.

Examples of the curing agents include melamine resins, urea resins, epoxy group-containing compounds or resins, carboxyl group-containing compounds or resins, acid anhydrides, alkoxysilane group-containing compounds or resins, and hydrazide compounds.

The curing catalyst may be a basic compound, or a Lewis acid compound.

Examples of the basic compound include metal hydroxides, metal alkoxides, metal carboxylates, metal acetylacetinates, hydroxides of onium salts, onium carboxylates, halides of onium salts, metallic salts of active methylene-based compounds, onium salts of active methylene-based compounds, aminosilanes, amines, and phosphines. Preferable examples of the onium salts include ammonium sals, phosphonium salts and sulfonium salts.

Examples of the Lewis acid compound include organic tin compounds, organic zinc compounds, organic titanium compounds, and organic zirconium compounds.

Examples of the solvent include the same solvents as mentioned for the blocked polyisocyanate composition.

As the pigment (such as extender pigment, coloration pigment, or metallic pigment), the ultraviolet absorber, the light stabilizer, the radical stabilizer, the yellowing-inhibitor that suppresses coloration at a baking step, the paint-surface adjusting agent, the flow adjusting agent, the pigment dispersing agent, the defoaming agent, the thickening agent or the film forming aid, a conventionally-known one may be selected to be used.

<Preparation method of resin composition>

The resin composition according to the present embodiment may be used as a solvent-based composition or a water-based composition. In the case where the resin composition contains the above-mentioned blocked polyisocyanate composition, the resin composition is preferably used as a water-based resin composition, because a resin composition having excellent curability at a low temperature of 80°C or less when made into a resin film has not been known yet.

In the case where a water-based resin composition is prepared, an additive, such as a curing agent that can react with a crosslinking functional group in the polyol, a curing catalyst, a solvent, a pigment (such as extender pigment, coloration pigment, or metallic pigment), a ultraviolet absorber, a light stabilizer, a radical stabilizer, a yellowing-inhibitor that suppresses coloration at a baking step, a paint-surface adjusting agent, a flow adjusting agent, a pigment dispersing agent, a defoaming agent, a thickening agent, or a film forming aid is added to the polyol, or an aqueous dispersion or an aqueous solution thereof, as needed. Then, the above-mentioned hydrophilic polyisocyanate composition, the above-mentioned blocked polyisocyanate composition or an aqueous dispersion thereof is added to the resultant as a curing agent, followed by further adding water or a solvent thereto, as needed, to adjust the viscosity of the resultant. Then, the resultant is forcibly stirred using a stirrer to obtain a water-based resin composition.

In the case where a solvent-based resin composition is prepared, an additive, such as a curing agent that can react with a crosslinking functional group in the polyol, a curing catalyst, a solvent, a pigment (such as extender pigment, coloration pigment, or metallic pigment), a ultraviolet absorber, a light stabilizer, a radical stabilizer, a yellowing-inhibitor that suppresses coloration at a baking step, a paint-surface adjusting agent, a flow adjusting agent, a pigment dispersing agent, a defoaming agent, a thickening agent, or a film forming aid is added to the polyol or a solvent dilution thereof, as needed. Then, the above-mentioned hydrophilic polyisocyanate composition, or the above-mentioned blocked polyisocyanate composition is added to the resultant as a curing agent, followed by further adding a solvent thereto, as needed, to adjust the viscosity of the resultant. Then, the resultant is stirred by hands or using a stirrer such as mazelar to obtain a solvent-based resin composition.

<<Resin film>>

The resin film according to the present embodiment is formed by curing the resin composition according to the present invention. In the case where the above-mentioned resin composition containing the hydrophilic polyisocyanate composition is used, the resultant resin film according to the present embodiment is provided with excellent hardness. In the case where the above-mentioned resin composition containing the blocked polyisocyanate composition is used, the curability at a low temperature of approximately 80°C or less is excellent.

The resin film according to the present embodiment is obtained by coating the above-mentioned resin composition on a substrate by using a conventionally-known coating method, such as roll coating, curtain flow coating, spray coating, bell coating, or electrostatic coating, followed by heating to cure the resultant.

The heating temperature is preferably approximately 60°C to 120°C, more preferably approximately 65°C to 110°C, and even more preferably approximately 70°C to 100°C, from the viewpoint of energy conservation and heat resistance of the substrate.

The heating time is preferably approximately 1 minute to 60 minutes, and more preferably approximately 2 minutes to 40 minutes from the viewpoint of energy conservation and heat resistance of the substrate.

The substrate is not particularly limited, and examples thereof include: outer plates of automotive bodies such as passenger cars, trucks, motorcycles, or buses; automotive parts such as bumpers; outer plates of home electric appliances such as cellular phones, or audio appliances; and various films.

The material of the substrate is not particularly limited, and examples thereof include: metal materials such as iron, aluminum, brass, copper, tin plate, stainless steel, galvanized steel, steel coated with zinc alloy (such as Zn-Al, Zn-Ni, and Zn-Fe); resins such as polyethylene resin, polypropylene resin, acrylonitrile-butadiene-styrene (ABS) resin, polyamide resin, acrylic resin, vinylidene chloride resin, polycarbonate resin, polyurethane resin, and epoxy resin; various plastic materials such as various FRP (fiber reinforced plastics); inorganic materials such as glass, cement, and concrete; and fibrous materials such as wood, paper, and cloth.

The substrate may be formed by subjecting the surface of the above-mentioned metal material or the metal surface of an automotive body formed from the above-mentioned metal material to surface treatment such as phosphoric acid salt treatment, chromate treatment, or composite oxide treatment, and then further forming a coating film thereon, as needed. The substrate having the coating film may be formed, for example, by conducting the surface treatment, as needed, and then forming an undercoating thereon, and examples thereof include automotive bodies in which an undercoating of an electrodeposition coating material is formed. The substrate may be formed by subjecting the surface of the above-mentioned plastic material or the plastic surface of an automotive part formed from the above-mentioned plastic to the desired surface treatment. The substrate may also be a combination of a plastic material and a metal material.

EXAMPLES

Hereinafter, although the present invention will be described further specifically by showing examples and comparative examples.

<Measurement method of physical properties>

[Physical property4-1]

(Modification ratio)

The amount of isocyanate groups modified with the hydrophilic compound, relative to the total mol of isocyanate groups of the alicyclic polyisocyanate, was determined by the following method using the hydrophilic polyisocyanate composition as a sample. The amount may be referred to as the ratio of isocyanate groups modified by the hydrophilic compound, relative to 100% by mol of isocyanate groups of the raw material polyisocyanate (modification ratio).

Specifically, the peak area ratio of unmodified IPDI-based isocyanurate type polyisocyanate, monomodified IPDI-based isocyanurate type polyisocyanate, dimodified IPDI-based isocyanurate type polyisocyanate, and trimodified IPDI-based isocyanurate type polyisocyanate was determined by liquid chromatography (LC) at 220 nm. The measurement device and measurement conditions are shown below.

(Device and measurement conditions)

LC device: UPLC (trade name) manufactured by Waters Corporation.
Column: ACQUITY UPLC HSS T3 1.8 $\mu$m, C18 inner diameter 2.1 mm $\times$ length 50 mm, manufactured by Waters Corporation.
Flow rate: 0.3 mL/min
Mobile phase: A = 10 mM ammonium acetate aqueous solution, B = acetonitrile
Gradient condition: An initial constitution of mobile phase was A/B=98/2, the ratio of B was increased linearly after the sample injection, such that the constitution of mobile phase after ten minutes became A/B=0/100.
Detection method: Photodiode array detector was used at a measurement wave length of 220 nm.

[Physical property 4-2]

(Amount of solid content)

A hydrophilic polyisocyanate composition or a blocked polyisocyanate composition was used as a sample.
The weight of an aluminum plate having a bottom diameter of 38 mm was measured. Then, approximately 1 g of a sample was placed on the aluminum plate, and the weight thereof (W1) was measured. Then, the thickness of the sample was adjusted to be uniform. Then, the sample placed on the aluminum plate was maintained at 105°C in an oven for 1 hour. Then, when the temperature of the aluminum plate decreased to room temperature, the weight (W2) of the sample remaining on the aluminum plate was measured. Then, the amount of solid content (% by mass) in the sample was calculated in accordance with the following formula.

$$\text{Amount of solid content [\% by mass]} = \text{W2/W1} \times 100$$

[Physical property 4-3]

(Amount of isocyanate groups (NCO%))

The amount of isocyanate groups was measured using a raw material polyisocyanate or a hydrophilic polyisocyanate composition as a sample in accordance with JIS K7301-1995 (test method of trilene diisocyanate-type prepolymer for thermosetting urethane elastomer). The method for measuring the amount of isocyanate groups are specifically described below.
(1) 1 g of a sample (W g) was put into a 200 mL conical flask, and then 20 mL of toluene was added thereto to solve the sample.
(2) Then, 20 mL of 2.0 N di-n-butylamine•toluene solution was added in the above-mentioned flask, and left still for 15 minutes.
(3) 70 mL of 2-propanol was added to the above-mentioned flask and then dissolved to obtain a solution.
(4) The solution obtained in the above-mentioned step (3) was subjected to titration using 1 mol/L hydrochloric acid to determine the sample titer (V1 mL).
(5) The blank titer (V0 mL) was measured by conducting the above-mentioned steps (1) to (3) except that no sample was used.

The amount of isocyanate groups (NCO%) was calculated from the sample titer and the blank titer using the following formula.

$$(\text{Amount of isocyanate groups})(\% \text{ by mass}) = (\text{V0-V1}) \times 42/[\text{W(1g)} \times 1000] \times 100$$

[Physical property 4-4]

(Number average molecular weight (Mn) and weight-average molecular weight (Mw))

The number average molecular weight (Mn) of a raw material polyisocyanate and the weight-average molecular weight (Mw) of a hydrophilic polyisocyanate composition were determined by GPC measurement with reference to polystyrene standards under the following measurement conditions.

(Measurement conditions)

Device: HLC-8120 GPC (trade name) manufactured by Tosoh Corporation
Column: TSKgel Super H1000 (trade name) × 1 column, TSKgel Super H2000 (trade name) × 1 column, TSKgel Super H3000 (trade name) × 1 column (all of these were manufactured by Tosoh Corporation.)
Carrier: Tetrahydrofuran
Detection method: Differential refractometer

[Physical property 4-5]

(Average number of isocyanate functional groups (average NCO number))

The average number of isocyanate functional groups (average NCO number) of a polyisocyanate before hydrophilization (before modification using a hydrophilic compound), that is, a raw material polyisocyanate, was determined by the following formula. In the formula, "Mn" represents the number average molecular weight of the raw material polyisocyanate, and the value measured in the above-mentioned "physical property 4-4" was used. The "NCO%" is the amount of isocyanate groups in the raw material polyisocyanate, and the value measured in the above-mentioned "physical property 4-3" was used.

$$[\text{Average NCO number}] = (\text{Mn} \times [\text{NCO\%}] \times 0.01)/42$$

<Evaluation method>

[Evaluation 4-1]

(Dispersibility in water)

Ion exchanged water was added to the hydrophilic polyisocyanate composition or the blocked polyisocyanate composition such that the amount of solid content, relative to the total mass of an aqueous dispersion, became 40% by mass, followed by stirring the mixture using a disper stirrer at a rotation speed of 1000 rpm for 5 minutes, and then defoaming the resultant to obtain an aqueous dispersion. The resultant aqueous dispersion was evaluated in terms of the dispersibility in water in accordance with the following criteria.

(Criteria)

    A: Liquid state in which neither precipitate nor visually-observable clumping was confirmed.
    B: Liquid state in which no precipitate was confirmed but visually-observable clumping was partially confirmed.
    C: Liquid state in which precipitate was deposited thinly and visually-observable clumping was partially confirmed.
    D: Liquid state in which precipitate was significantly confirmed or a large amount of visually-observable clumping was confirmed.

[Preparation of resin composition]

An acrylic dispersion (manufactured by Allnex Company, "SETAQUA 6515" (trade name), in which the amount of hydroxyl group was 3.3% by mol (based on resin), and the amount of solid content, relative to the total mass of the acrylic dispersion, was 45% by mass) and either the hydrophilic polyisocyanate composition or the blocked polyisocyanate composition were mixed such that the molar ratio of isocyanate groups to hydroxyl groups (isocyanate group / hydroxyl group) became 1. Then, ion exchanged water was added to the mixture such that the amount of solid content, relative to the total mass of the resin composition, became 40% by mass, followed by stirring the mixture at a rotation speed of 1000 rpm for 10 minutes using a disper stirrer to obtain a resin composition.

[Evaluation 4-2]

(Koenig hardness)

The resultant resin composition was coated on a glass plate such that the dried film thickness became 40 $\mu$m, followed by heating to dry at 80°C for 30 minutes to obtain a resin film. The Koenig hardness (times) of the resultant resin film was measured using a Koenig hardness meter.

[Evaluation 4-3]

(Curability at low temperature)

The resin film was formed by the same way as described in "evaluation 4-2" by conducting coating on a polypropylene (PP) plate such that a dried film thickness became 40 μm, and then drying at 80°C for 30 minutes by heating. The resultant resin film was stored at ordinary temperature (23°C) for 1 week to measure the gel fraction. The gel fraction was determined as a percentage (% by mass) by dividing the mass of the undissolved portion when the resin film was immersed in acetone at 23°C for 24 hours by the mass of the resin film before being immersed. The case where the gel fraction was 75% by mass or more was evaluated as favorable.

<Preparation of hydrophilic polyisocyanate composition >

[Example 4-1]

(Preparation of hydrophilic polyisocyanate composition P-al)

100 parts by mass of isophorone diisocyanate-based polyisocyanate having an isocyanurate group, in which the amount of solid content was 100% by mass and the amount of isocyanate groups was 17.4% by mass, (hereinafter, may be abbreviated as "IPDI-based isocyanurate-type P1"), 8.3 parts by mass (the amount of ethylene oxide, relative to 100% by mol of isocyanate groups, was 3% by mol) of methoxypolyethylene glycol (MPG-081 (trade name), ethylene oxide repeating units: 15 units, manufactured by NIPPON NYUKAZAI CO., LTD.) and dipropylene glycol dimethyl ether (DPDM) were mixed in a four-necked flask equipped with a thermometer, a stirrer blade and a reflux cooling tube in a nitrogen flow to allow the reaction to proceed at 115°C for 2 hours. Then, the reaction liquid was cooled to 40°C to obtain a hydrophilic polyisocyanate composition P-a1 in which the amount of solid content was 60.1% by mass.

[Examples 4-2 to 4-6 and Comparative Examples 4-1 to 4-4]

(Preparation of hydrophilic polyisocyanate compositions P-a2 to P-a6 and P-b1 to P-b4)

Each hydrophilic polyisocyanate composition was obtained by the same method as that in Example 4-1 except that methoxypolyethylene glycol MPG-081, that was a hydrophilic compound, was formulated such that the molar amount (modification ratio) of ethylene oxide, relative to 100% by mol of isocyanate groups, was shown in Table 1 or 2.
Physical properties of each hydrophilic polyisocyanate composition obtained in the example or comparative example were measured and evaluated by the above-mentioned methods. Results are shown in Tables 15 and 16.

Table 15

| | | Ex. 4-1 | Ex. 4-2 | Ex. 4-3 | Ex. 4-4 | Ex. 4-5 | Ex. 4-6 |
|---|---|---|---|---|---|---|---|
| Hydrophilic polyisocyanate composition | | P-a1 | P-a2 | P-a3 | P-a4 | P-a5 | P-a6 |
| Constitution | Polyisocyanate | IPDI-based isocyanurate type PI | IPDI-based isocyanurate type PI | IPDI-based isocyanurate type PI | IPDI-based isocyanurate type PI | IPDI-based isocyanurate type PI | IPDI-based isocyanurate type PI |
| | Hydrophilic compound | MPG-081 | MPG-081 | MPG-081 | MPG-081 | MPG-081 | MPG-081 |
| Physical property | Modification ratio (% by mol) | 3 | 5 | 7 | 10 | 12 | 15 |
| | Amount of solid content (% by mass) | 60.1 | 60.2 | 59.9 | 60.1 | 60.1 | 60.2 |
| | NCO% (% by mass) (Measured value of hydrophilic polyisocyanate composition) | 9.3 | 8.7 | 8.1 | 7.3 | 6.9 | 6.3 |
| | Average number of functional NCO group (Value measured before modification with hydrophilic group) | 3.4 | 3.4 | 3.4 | 3.4 | 3.4 | 3.4 |
| | Weight-average molecular weight Mw (Measured value of hydrophilic polyisocyanate composition) | $1.97\times 10^3$ | $2.25\times 10^3$ | $2.45\times 10^3$ | $2.66\times 10^3$ | $2.89\times 10^3$ | $3.15\times 10^3$ |
| Evaluation | Dispersibility in water | B | A | A | A | A | B |
| | Koenig hardness | 146 | 150 | 147 | 136 | 133 | 128 |
| (Ex.: Example) | | | | | | | |

Table 16

| | | C.Ex. 4-1 | C.Ex. 4-2 | C.Ex. 4-3 | C.Ex. 4-4 |
|---|---|---|---|---|---|
| Hydrophilic polyisocyanate composition | | P-b1 | P-b2 | P-b3 | P-b4 |
| Constitution | Polyisocyanate | IPDI-based isocyanurate type PI | IPDI-based isocyanurate type PI | IPDI-based isocyanurate type PI | IPDI-based isocyanurate type PI |
| | Hydrophilic compound | - | MPG-081 | MPG-081 | MPG-081 |
| Physical property | Modification ratio (% by mol) | 0 | 1 | 20 | 30 |
| | Amount of solid content (% by mass) | 60.1 | 60.2 | 59.9 | 60.1 |
| | NCO% (% by mass) (Measured value of hydrophilic polyisocyanate composition) | 10.4 | 10.0 | 5.4 | 4.0 |
| | Average number of functional NCO group (Value measured before modification with hydrophilic group) | 3.4 | 3.4 | 3.4 | 3.4 |
| | Weight-average molecular weight Mw (Measured value of hydrophilic polyisocyanate composition) | $1.45\times10^3$ | $1.55\times10^3$ | $3.32\times10^3$ | $3.82\times10^3$ |
| Evaluation | Dispersibility in water | D | D | D | D |
| | Koenig hardness | 65 | 103 | 101 | 73 |

(C.Ex.: Comparative Example)

As shown in Tables 15 and 16, the hydrophilic polyisocyanate compositions Pa1 to P-a6 (Examples 4-1 to 4-6), each having a modification ratio of 3% by mol to 15% by mol, exhibited favorable dispersibility in water and excellent Koenig hardness when made into a resin film.

In addition, the compositions P-a2 to P-a5 (Examples 4-2 to 4-5), each having a modification ratio of 5% by mol to 12% by mol, exhibited particularly favorable dispersibility in water.

In contrast, the hydrophilic polyisocyanate compositions P-b1 to P-b4 (Comparative Examples 4-1 to 4-4), each having a modification ratio of less than 2% by mol or more than 15% by mol, exhibited unfavorable dispersibility in water and unfavorable Koenig hardness when made into a resin film.

<Preparation of blocked polyisocyanate composition>

[Example 4-7]

(Preparation of blocked polyisocyanate composition BP-a1)

A diisopropyl malonate (B-2) was added to the hydrophilic polyisocyanate composition P-a1 obtained in Example 4-1 as a blocking agent in an amount of 1.1 mole equivalent per mole of isocyanate groups, and then 1.0 part by mass (solution amount) of a methanol solution containing 28% by mass of sodium methylate, relative to the total mass of the solution, was added to the mixture, followed by further adding DPDM thereto such that the amount of solid content became 60% by mass. The resultant was stirred over 6 hours or more while maintaining the temperature in the inner bath at 55°C, and then no absorption due to isocyanate groups was confirmed by infrared spectrum. Thus, a blocked polyisocyanate composition BP-a1, in which the amount of solid content was 60.1% by mass, was obtained.

[Examples 4-8 to 4-12 and Comparative Examples 4-5 to 4-8]

(Preparation of blocked polyisocyanate compositions BP-a2 to BP-a6 and BP-b1 to BP-b8)

Each blocked polyisocyanate composition was obtained by the same way as that in Example 4-7, except that a hydrophilic polyisocyanate composition and a blocking agent as shown in Table 17 or 18 were used, instead of the hydrophilic polyisocyanate composition P-a1.

[Example 4-13]

(Preparation of blocked polyisocyanate composition BP-a7)

A di-tert-butyl malonate (B-1) was added to the hydrophilic polyisocyanate composition P-a2 obtained in Example 4-2 as a blocking agent in an amount of 1.1 mole equivalent per mole of isocyanate groups, and then 1.0 part by mass (solution amount) of a methanol solution containing 28% by mass of sodium methylate, relative to the total mass of the solution, was added to the mixture, followed by further adding DPDM thereto such that the amount of solid content became 60% by mass. The resultant was stirred over 6 hours or more while maintaining the temperature in the inner bath at 55°C, and then no absorption due to isocyanate groups was confirmed by infrared spectrum. Thus, a blocked polyisocyanate composition BP-a7, in which the amount of solid content was 60.1% by mass, was obtained.

[Example 4-14]

(Preparation of blocked polyisocyanate composition BP-a8)

A blocked polyisocyanate composition BP-a8 was obtained by the same way as that in Example 4-13, except that the hydrophilic polyisocyanate composition P-a3 obtained in Example 4-3 was used instead of the hydrophilic polyisocyanate composition P-a2 obtained in Example 4-2.

The physical properties of each blocked polyisocyanate composition obtained in the examples and comparative examples were measured and evaluated by the above-mentioned methods. Results are shown in Tables 17 and 18.

Table 17

| | | Ex. 4-7 | Ex. 4-8 | Ex. 4-9 | Ex. 4-10 | Ex. 4-11 | Ex. 4-12 | Ex. 4-13 | Ex. 4-14 |
|---|---|---|---|---|---|---|---|---|---|
| Blocked polyisocyanate composition | | BP-a1 | BP-a2 | BP-a3 | BP-a4 | BP-a5 | BP-a6 | BP-a7 | BP-a8 |
| Constitution | Hydrophilic polyisocyanate composition | P-a1 | P-a2 | P-a3 | P-a4 | P-a5 | P-a6 | P-a2 | P-a3 |
| | Blocking agent | B-2 | B-2 | B-2 | B-2 | B-2 | B-2 | B-1 | B-1 |
| Physical property | Amount of solid content (% by mass) | 60.1 | 60.2 | 59.9 | 60.1 | 60.1 | 60.2 | 60.2 | 59.9 |
| Evaluation | Dispersibility in water | B | A | A | A | A | A | A | A |
| | Koenig hardness | 124 | 118 | 114 | 104 | 95 | 87 | 138 | 135 |
| | Curability at low temperature (Gel fraction (%)) | 76.1 | 76.5 | 78.2 | 79.0 | 79.2 | 79.5 | 84.0 | 84.5 |
| (Ex.: Example) | | | | | | | | | |

Table 18

| | C.Ex. 4-5 | C.Ex. 4-6 | C.Ex. 4-7 | C.Ex. 4-8 |
|---|---|---|---|---|
| Blocked polyisocyanate composition | BP-b1 | BP-b2 | BP-b3 | BP-b4 |

(continued)

| | | C.Ex. 4-5 | C.Ex. 4-6 | C.Ex. 4-7 | C.Ex. 4-8 |
|---|---|---|---|---|---|
| Constitutions | Hydrophilic polyisocyanate composition | P-b1 | P-b2 | P-b3 | P-b4 |
| | Blocking agent | B-2 | B-2 | B-2 | B-2 |
| Physical property | Amount of solid content (% by mass) | 60.1 | 60.2 | 59.9 | 60.1 |
| Evaluation | Dispersibility in water | D | D | D | D |
| | Koenig hardness | 43 | 55 | 49 | 33 |
| | Curability at low temperature (Gel fraction (%)) | 58.2 | 68.3 | 59.8 | 51.3 |
| (C.Ex.: Comparative Example) | | | | | |

As shown in Tables 17 and 18, the blocked polyisocyanate compositions BP-a1 to BP-a8 (Examples 4-7 to 4-14) prepared by using the hydrophilic polyisocyanate compositions, each having a modification ratio of 3% by mol to 15% by mol, exhibited favorable dispersibility in water, and excellent Koenig hardness and favorable curability at a low temperature when made into a resin film.

In addition, the dispersibility in water and the curability at a low temperature, when made into a resin film, tended to become favorable, depending on an increase in the modification ratio of the used hydrophilic polyisocyanate compositions. In contrast, the Koenig hardness, when made into a resin film, tended to become favorable, depending on the decrease in the modification ratio of the used hydrophilic polyisocyanate compositions.

In addition, the blocked polyisocyanate compositions BP-a7 and BP-a8 (Examples 4-13 and 4-14) prepared by using di-tert-butyl malonate as a blocking agent exhibited Koenig hardness and curability at a low temperature, when made into a resin film, superior to the those of the blocked polyisocyanate compositions BP-a2 and BP-a3 (Examples 4-8 and 4-9) prepared by using diisopropyl malonate as a blocking agent.

In contrast, the blocked polyisocyanate compositions BP-b1 to BP-b4 (Comparative Examples 4-5 to 4-8) prepared by using the hydrophilic polyisocyanate compositions having a modification ratio of less than 2% by mol or more than 15% by mol, exhibited unfavorable dispersibility in water, and unfavorable hardness and unfavorable curability at a low temperature, when made into a resin film.

[Example 4-15]

(Synthesis of polyisocyanate P-c1)

100 parts by mass of HDI and 5.2 parts by mass of polyester polyol (manufactured by Daicel Corporation, "PLACCEL 303" (trade name)) derived from trivalent alcohol and ε-caprolactone were charged into a four-necked flask equipped with a thermometer, a stirrer blade and a reflux cooling tube in a nitrogen flow, and then the mixture was stirred while maintaining the temperature in the reactor at 90°C for 1 hour to allow a urethane-forming reaction to proceed. Then, the temperature in the reactor was maintained at 60°C, tetramethylammonium caprylate, that was an isocyanurate-forming catalyst, was added to the resultant, followed by adding a phosphoric acid when the yield reached 51% by mass to terminate the reaction. The reaction liquid was subjected to filtration, and then unreacted HDI was removed therefrom using a thin film evaporator to obtain an isocyanurate-type polyisocyanate (hereinafter, may be referred to as "polyisocyanate P-c1"). The NCO amount of the resultant polyisocyanate P-c1 was 18.7% by mass, the number average molecular weight thereof was 1140, and the average number of isocyanate groups was 5.1. The resultant polyisocyanate P-c1 was subjected to GPC analysis and $^1$H-NMR analysis to confirm the presence of an isocyanurate trimer.

[Example 4-16]

(Preparation of blocked polyisocyanate composition BP-c1)

100 parts by mass of the polyisocyanate P-c1 obtained in Example 4-15, 1.5 parts by mass (0.5% by mol, relative to 100% by mol of isocyanate groups) of methoxypolyethylene glycol (MPG-081, ethylene oxide repeating units: 15 units, manufactured by NIPPON NYUKAZAI CO., LTD.), 0.01 parts by mass of 2-ethylhexyl acid phosphate (JP-508T, manufactured by JOHOKU CHEMICAL CO., LTD.), and dipropylene glycol dimethyl ether (DPDM) were mixed such that the amount of solid content became 65% by mass in a four-necked flask equipped with a thermometer, a stirrer blade and a reflux cooling tube in a nitrogen flow, to allow the reaction to proceed at 115°C for 2 hours. The reaction liquid was cooled to 40°C, and then di-tert-butyl malonate was added to the resultant as a blocking agent in an amount of 1.1 mole equivalent per mole of isocyanate groups in the reactant, followed by adding 1.0 part by mass (solution amount) of a methanol solution containing 28% by mass of sodium methylate to the mixture. The resultant was stirred over 6 hours or more while maintaining the temperature in the inner bath at 48°C, and then no absorption due to isocyanate groups was confirmed by infrared spectrum, followed by adding DPDM to the resultant such that the amount of solid content became 60% by mass, stirring the mixture, and then cooling the resultant to 40°C or less to obtain a blocked polyisocyanate composition BP-c1.

[Example 4-17]

(Preparation of blocked polyisocyanate compositionBP-d1)

The blocked polyisocyanate compositions BP-c1 and BP-a7 were mixed at a NCO mole ratio of 95:5 in a four-necked flask equipped with a thermometer, a stirrer blade and a reflux cooling tube in a nitrogen flow, followed by stirring the mixture for 30 minutes to obtain a blocked polyisocyanate composition BP-d1, in which the amount of solid content was 60.1% by mass.

[Examples 4-18 to 4-20]

In Examples 4-18 to 4-20, blocked polyisocyanate compositions were prepared by the same way as that in Example 4-17, except that constitutions as shown in Table 19 were used.
Physical properties of the resultant blocked polyisocyanate compositions were measured and evaluated by the above-mentioned methods. Results are shown in Table 19.

Table 19

| | | Ex. 4-17 | Ex. 4-18 | Ex. 4-19 | Ex. 4-20 |
|---|---|---|---|---|---|
| Blocked polyisocyanate composition | | BP-d1 | BP-d2 | BP-d3 | BP-d4 |
| Constitutions | Blocked polyisocyanate composition / Hydrophilic polyisocyanate composition (molar ratio) | BP-c1/ BP-a7 =95/5 | BP-c1/ BP-a8 =95/5 | BP-c1/ BP-a7 =92/8 | BP-c1/ BP-a8 =92/8 |
| | Blocking agent | B-2 | B-2 | B-2 | B-2 |
| Physical property | Amount of solid content (% by mass) | 60.0 | 60.0 | 60.0 | 60.0 |
| Evaluation | Dispersibility in water | A | A | A | A |
| | Koenig hardness | 92 | 89 | 94 | 91 |
| | Curability at low temperature (Gel fraction (%)) | 89.5 | 89.7 | 89.8 | 90.0 |
| (Ex.: Example) | | | | | |

INDUSTRIAL APPLICABILITY

The hydrophilic polyisocyanate composition according to the present embodiment makes it possible to realize favorable dispersibility in water and provide a resin film having excellent hardness.

**Claims**

1.  A hydrophilic polyisocyanate composition derived from a hydrophilic compound and an alicyclic polyisocyanate having an isocyanurate group,

    wherein an amount of isocyanate groups modified by the hydrophilic compound, relative to a total mol of isocyanate groups in the alicyclic polyisocyanate is 2% by mol to 15% by mol, and
    wherein the hydrophilic polyisocyanate composition does not include an additional polyisocyanate.

2. The hydrophilic polyisocyanate composition according to claim 1, wherein the alicyclic polyisocyanate comprises a polyisocyanate having an isocyanurate group, derived from an isophorone diisocyanate.

3. The hydrophilic polyisocyanate composition according to claim 1 or 2, wherein an average number of isocyanate functional groups in the alicyclic polyisocyanate is 2.5 to 6.0.

4. The hydrophilic polyisocyanate composition according to any one of claims 1 to 3, wherein a weight-average molecular weight of the hydrophilic polyisocyanate composition is 900 to 20000.

5. The hydrophilic polyisocyanate composition according to any one of claims 1 to 4, wherein the hydrophilic compound is a nonionic compound or an anionic compound.

6. A blocked polyisocyanate composition formed by blocking at least a part of the isocyanate groups in the hydrophilic polyisocyanate composition of any one of claims 1 to 5 with a blocking agent.

7. The blocked polyisocyanate composition according to claim 6, wherein the blocking agent is at least one compound selected from the group consisting of active methylene-based compounds, oxime-based compounds, amine-based compounds, pyrazole-based compounds, and triazole-based compounds.

8. A resin composition comprising: a hydrophilic polyisocyanate composition of any one of claims 1 to 5; and a polyol.

9. A resin composition comprising: a blocked polyisocyanate composition of claim 6 or 7; and a polyol.

10. A resin film formed by curing a resin composition of claim 8 or 9.

**Patentansprüche**

1. Zusammensetzung von hydrophilem Polyisocyanat, abgeleitet von einer hydrophilen Verbindung und einem alicyclischen Polyisocyanat, welches eine Isocyanuratgruppe aufweist,

   wobei die Menge der durch die hydrophile Verbindung modifizierten Isocyanatgruppen, bezogen auf die Gesamtmol an Isocyanatgruppen in dem alicyclischen Polyisocyanat, 2 Mol-% bis 15 Mol-% beträgt, und
   wobei die Zusammensetzung von hydrophilem Polyisocyanat kein zusätzliches Polyisocyanat enthält.

2. Zusammensetzung von hydrophilem Polyisocyanat nach Anspruch 1, wobei das alicyclische Polyisocyanat ein Polyisocyanat, welches eine von einem Isophorondiisocyanat abgeleitete Isocyanuratgruppe aufweist, umfasst.

3. Zusammensetzung von hydrophilem Polyisocyanat nach Anspruch 1 oder 2, wobei die mittlere Anzahl funktioneller Isocyanatgruppen in dem alicyclischen Polyisocyanat 2,5 bis 6,0 ist.

4. Zusammensetzung von hydrophilem Polyisocyanat nach einem der Ansprüche 1 bis 3, wobei das gewichtsmittlere Molekulargewicht der hydrophilen Polyisocyanatzusammensetzung 900 bis 20000 beträgt.

5. Zusammensetzung von hydrophilem Polyisocyanat nach einem der Ansprüche 1 bis 4, wobei die hydrophile Verbindung eine nichtionische Verbindung oder eine anionische Verbindung ist.

6. Zusammensetzung von blockiertem Polyisocyanat, welche durch Blockieren mindestens eines Teils der Isocyanatgruppen in der Zusammensetzung von hydrophilem Polyisocyanat nach einem der Ansprüche 1 bis 5 mit einem Blockierungsmittel gebildet ist.

7. Zusammensetzung von blockiertem Polyisocyanat nach Anspruch 6, wobei das Blockierungsmittel mindestens eine Verbindung ist, ausgewählt aus der Gruppe bestehend aus Verbindungen auf Basis von aktivem Methylen, Verbindungen auf Oximbasis, Verbindungen auf Aminbasis, Verbindungen auf Pyrazolbasis und Verbindungen auf Triazolbasis.

8. Harzzusammensetzung, umfassend: Zusammensetzung von hydrophilem Polyisocyanat nach einem der Ansprüche 1 bis 5 und ein Polyol.

9. Harzzusammensetzung, umfassend: eine Zusammensetzung von blockiertem Polyisocyanat nach Anspruch 6 oder 7 und ein Polyol.

10. Harzfilm/-folie, gebildet durch Härten einer Harzzusammensetzung nach Anspruch 8 oder 9.


**Revendications**

1. Composition de polyisocyanate hydrophile dérivée d'un composé hydrophile et d'un polyisocyanate alicyclique présentant un groupe isocyanurate,

   dans laquelle une quantité de groupes isocyanate modifiés par le composé hydrophile, par rapport à un nombre total de moles de groupes isocyanate dans le polyisocyanate alicyclique est de 2 % en moles à 15 % en moles, et dans laquelle la composition de polyisocyanate hydrophile ne comporte pas de polyisocyanate additionnel.

2. Composition de polyisocyanate hydrophile selon la revendication 1, dans laquelle le polyisocyanate alicyclique comprend un polyisocyanate présentant un groupe isocyanurate, dérivé d'un diisocyanate d'isophorone.

3. Composition de polyisocyanate hydrophile selon la revendication 1 ou 2, dans laquelle un nombre moyen de groupes fonctionnels isocyanate dans le polyisocyanate alicyclique est de 2,5 à 6,0.

4. Composition de polyisocyanate hydrophile selon l'une quelconque des revendications 1 à 3, dans laquelle un poids moléculaire moyen en poids de la composition de polyisocyanate hydrophile est de 900 à 20 000.

5. Composition de polyisocyanate hydrophile selon l'une quelconque des revendications 1 à 4, dans laquelle le composé hydrophile est un composé non ionique ou un composé anionique.

6. Composition de polyisocyanate bloqué formée par blocage d'au moins une partie des groupes isocyanate dans la composition de polyisocyanate hydrophile selon l'une quelconque des revendications 1 à 5 avec un agent de blocage.

7. Composition de polyisocyanate bloqué selon la revendication 6, dans laquelle l'agent de blocage est au moins un composé choisi dans le groupe constitué de composés à base de méthylène actif, de composés à base d'oxime, de composés à base d'amine, de composés à base de pyrazole et de composés à base de triazole.

8. Composition de résine comprenant : une composition de polyisocyanate hydrophile selon l'une quelconque des revendications 1 à 5 ; et un polyol.

9. Composition de résine comprenant : une composition de polyisocyanate bloqué selon la revendication 6 ou 7 ; et un polyol.

10. Film de résine formé par durcissement d'une composition de résine selon la revendication 8 ou 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002322238 A
- JP 2006335954 A
- WO 2019065890 A1
- EP 3517559 A1
- JP 57034107 A
- JP 61275311 A
- JP 508 T